(19) Europäisches Patentamt / European Patent Office / Office européen des brevets

(11) **EP 4 489 359 B1**

(12) **EUROPEAN PATENT SPECIFICATION**

(45) Date of publication and mention
of the grant of the patent:
**13.05.2026 Bulletin 2026/20**

(21) Application number: **24186184.8**

(22) Date of filing: **03.07.2024**

(51) International Patent Classification (IPC):
**H04L 27/00** (2006.01)    **H04L 27/26** (2006.01)

(52) Cooperative Patent Classification (CPC):
**H04L 27/2657; H04L 27/0014; H04L 27/2675**

(54) **METHOD AND APPARATUS FOR ESTIMATING FREQUENCY OFFSET IN WIRELESS COMMUNICATION SYSTEM**

VERFAHREN UND VORRICHTUNG ZUR SCHÄTZUNG DES FREQUENZVERSATZES IN EINEM DRAHTLOSKOMMUNIKATIONSSYSTEM

PROCÉDÉ ET APPAREIL D'ESTIMATION DE DÉCALAGE DE FRÉQUENCE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.07.2023 KR 20230087400**
**06.10.2023 KR 20230133696**

(43) Date of publication of application:
**08.01.2025 Bulletin 2025/02**

(73) Proprietor: **Samsung Electronics Co., Ltd**
**Suwon-si, Gyeonggi-do 16677 (KR)**

(72) Inventors:
• **SON, Youngwook**
**16677 Suwon-si, Gyeonggi-do (KR)**
• **KIM, Hyeonjun**
**16677 Suwon-si, Gyeonggi-do (KR)**
• **LEE, Jung Woon**
**16677 Suwon-si, Gyeonggi-do (KR)**
• **JEON, Hyunbae**
**16677 Suwon-si, Gyeonggi-do (KR)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**WO-A1-2008/082367    CN-A- 114 338 325**

• **CHIUEH TZI-DAR ET AL: "OFDM Baseband Receiver Design for Wireless Communications OFDM Baseband Receiver Design for Wireless Communications Tzi-Dar Chiueh and Pei", OFDM BASEBAND RECEIVER DESIGN FOR WIRELESS COMMUNICATIONS, 1 January 2007 (2007-01-01), SI, XP055748425, ISBN: 978-0-470-82234-0, Retrieved from the Internet <URL:http://www.ee.iitm.ac.in/~giri/pdfs/ EE6323-2020/book1-tsai.pdf> [retrieved on 20201109]**

**Description**

BACKGROUND

Aspects of the inventive concept relate to a method and apparatus for determining a frequency offset so as to improve communication performance.

As an example of wireless communication, a wireless local area network (WLAN) is technology that connects two or more devices by using a wireless signal transmission method. A WLAN may be based on the Institute of Electrical and Electronics Engineers (IEEE) 802.11 standard. The 802.11 standard has evolved into 802.11b, 802.11a, 802.11g, 802.11n, 802.11ac, 802.11ax, etc., and is capable of supporting a transmission rate of up to 1 Gbyte/s based on orthogonal frequency division multiplexing (OFDM).

In 802.11ac, data may be simultaneously transmitted to multiple users through multiuser multi-input multi-output (MU-MIMO). In 802.11ax, also called high efficiency (HE), orthogonal frequency division multiple access (OFDMA) as well as MU-MIMO is also applied to implement multiple access by splitting available subcarriers and providing the split subcarriers to users. Accordingly, a WLAN system, to which 802.11ax is applied, may effectively support communication in dense areas and outdoors.

802.11be, also called extremely high throughput (EHT), seeks to support a 6-GHz unlicensed frequency band, to support various bandwidths per channel, to introduce hybrid automatic repeat and request (HARQ), and to support up to 16x16 MIMO. Accordingly, next-generation WLAN systems are expected to effectively support low latency and high-speed transmission such as new radio (NR), which is $5^{th}$ generation (5G) technology. Recently, new technologies capable of supporting a bandwidth of up to 640 MHz per channel in 802.11be have been proposed to increase spectral efficiency and the transmission rate.

In wireless communication systems, a difference may occur between a carrier frequency of a transmission signal transmitted by a transmitter and a carrier frequency of a reception signal recognized by a receiver. Due to such a difference, the receiver may calculate a frequency offset and match the carrier frequency of the transmission signal to the carrier frequency of the reception signal.

In wideband wireless communication systems, due to various factors, a difference may occur between a carrier frequency of a transmission signal transmitted by a transmitter and a carrier frequency of a reception signal recognized by a receiver. Therefore, there is a need for a method of determining a frequency offset by taking into account various factors.

CN 114 338 325 A discloses a carrier frequency offset and sampling frequency offset determination method and device.

SUMMARY

Aspects of the inventive concept provide a method and apparatus for determining a frequency offset so as to improve communication performance.

The invention is set out in the appended set of claims.

BRIEF DESCRIPTION OF THE DRAWINGS

Embodiments will be more clearly understood from the following detailed description taken in conjunction with the accompanying drawings in which:

FIG. 1 is a diagram illustrating a wireless communication system according to an embodiment;
FIG. 2 illustrates a block diagram of a wireless communication device according to an embodiment;
FIG. 3A illustrates a block diagram of a wireless communication device according to an embodiment;
FIG. 3B is a diagram for describing a sampling clock offset (SCO);
FIG. 3C illustrates a carrier frequency offset (CFO) and an SCO in a frequency domain;
FIG. 3D illustrates an embodiment of calibrating deviation due to an SCO effect from a CFO for each of 16 sub-bands with respect to a reception signal having a bandwidth of 320 MHz in a wideband channel;
FIG. 4 illustrates an operation procedure of a wireless communication device according to an embodiment;
FIG. 5A illustrates an operation procedure of a wireless communication device according to an embodiment;
FIG. 5B illustrates an operation procedure of a wireless communication device at an $m^{th}$ sub-band, according to an embodiment;
FIG. 5C illustrates an operation of a wireless communication device at each sub-band and a method of combining a plurality of sub-bands, according to an embodiment;
FIG. 6 illustrates a method of detecting a reception signal at a sub-band, obtaining a synchronization timing, and determining a frequency offset based on the synchronization timing and the reception signal, according to an embodiment;

FIG. 7 illustrates an operation procedure of a wireless communication device according to an embodiment;

FIG. 8 illustrates signals that are processed by a wireless communication device, according to an embodiment;

FIGS. 9A and 9B illustrate frequency offsets in which an SCO effect is not calibrated in an additive white Gaussian noise (AWGN) channel;

FIGS. 9C and 9D illustrate frequency offsets in which an SCO effect is calibrated in an AWGN channel, according to an embodiment;

FIGS. 9E and 9F illustrate frequency offsets in which an SCO effect is not calibrated in a fading channel, according to an embodiment;

FIGS. 9G and 9H illustrate frequency offsets in which an SCO effect is not calibrated in a fading channel, according to an embodiment;

FIG. 10 illustrates a "frequency offset of a frequency band" at which an SCO effect is not calibrated and a "frequency offset of a frequency band" at which an SCO effect is calibrated, in a fading channel; and

FIG. 11 is a diagram illustrating examples of devices for wireless communication, according to an embodiment. The embodiments illustrated in figures 1, 2, 3A to 3D, 4, 7, 8, 9A to 9H, 10, 11 are embodiments useful for understanding the invention. (GL-F-IV, 4.3 (ii)).

## DETAILED DESCRIPTION OF THE EMBODIMENTS

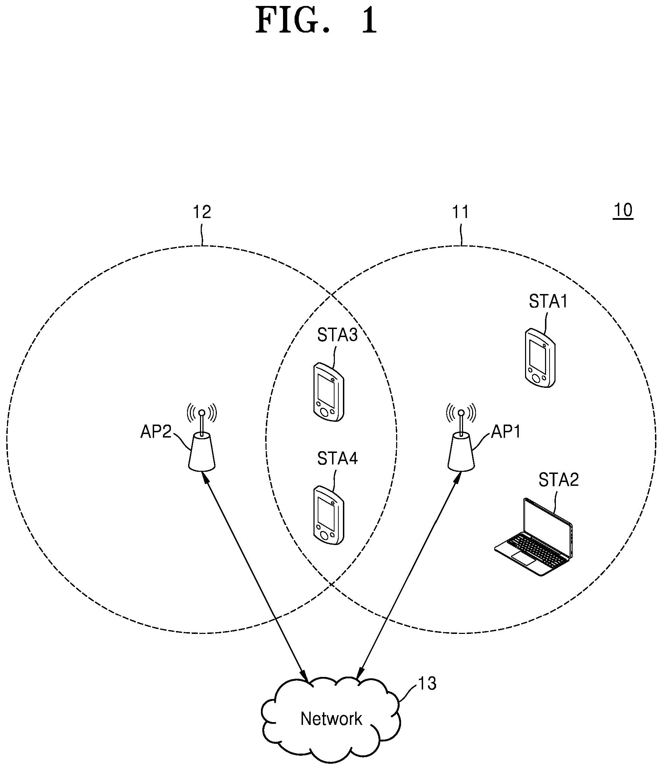

FIG. 1 is a diagram illustrating a wireless communication system 10 according to an embodiment.

Specifically, FIG. 1 illustrates a wireless local area network (WLAN) system as an example of the wireless communication system 10. Detailed descriptions of embodiments focus on orthogonal frequency division multiplexing (OFDM) or orthogonal frequency division multiple access (OFDMA) based wireless communication systems, especially the IEEE 802.11 standard. However, aspects of the inventive concept may also be applied to other communication systems (e.g., cellular communication systems, such as long term evolution (LTE), LTE-advanced (LTE-A), new radio (NR), wireless broadband (WiBro), and global system for mobile communication (GSM), or short-range communication systems, such as Bluetooth and near field communication (NFC)) having similar technical background and channel forms through slight modifications without significantly departing from the scope of the inventive concept. This may be enabled by determination of those of ordinary skill in the art.

In addition, various functions described below may be implemented or supported by artificial intelligence technologies or one or more computer programs, each of which may be implemented as computer-readable program code and may be executed on a computer-readable recording medium. The terms "application" and "program" refer to one or more computer programs, software components, sets of instructions, procedures, functions, objects, classes, instances, associated data, or portions thereof suitable for implementation of appropriate computer-readable program code. The term "computer-readable program code" includes any type of computer code, including source code, object code, and executable code. The term "computer-readable recording medium" includes any type of memory that is accessible by a computer, such as read only memory (ROM), random access memory (RAM), a hard disk drive, a compact disk (CD), a digital video disk (DVD), or any other type of memory. The "non-transitory" computer-readable recording medium excludes wired, wireless, optical, or other communication links that transmit transient electrical or other signals. The non-transitory computer-readable recording medium includes a medium that allows data to be permanently stored and a medium that allows data to be stored and overwritten later, such as a rewritable optical disk or an erasable memory device.

In various embodiments described below, hardware approaches are described as an example. However, because various embodiments include technologies using both hardware and software, various embodiments do not exclude software-based approaches.

In addition, the terms referring to control information, the terms referring to entries, the terms referring to network entities, the terms referring to messages, the terms referring to elements of devices, and the like are exemplified for convenience of explanation. Therefore, the inventive concept is not limited to the terms to be described below, and other terms referring to an equivalent technical meaning may be used.

Referring to FIG. 1, the wireless communication system 10 may include first and second access points AP1 and AP2, a first station STA1, a second station STA2, a third station STA3, and a fourth station STA4. The first and second access points AP1 and AP2 may be connected to a network 13 including the Internet, an Internet protocol (IP) network, or any other networks. The first access point AP1 may provide the first, second, third, and fourth stations STA1, STA2, STA3, and STA4 with access to the network 13 within a first coverage area 11, and the second access point AP2 may provide the third and fourth stations STA3 and STA4 with access to the network 13 within a second coverage area 12. In some embodiments, the first and second access points AP1 and AP2 may communicate with at least one of the first, second, third, and fourth stations STA1, STA2, STA3, and STA4 based on wireless fidelity (Wi-Fi) or any other WLAN access technologies.

An access point may be referred to as a router, a gateway, etc., and a station may be referred to as a mobile station, a subscriber station, a terminal, a mobile terminal, a wireless terminal, user equipment, a user, etc. The station may be a mobile device, such as a mobile phone, a laptop computer, a wearable device, etc., or may be a stationary device, such as a desktop computer, a smart television (TV), etc.

The access point may determine a channel bandwidth used to communicate with the station to be one of a plurality of channel bandwidths. According to aspects of the inventive concept, the channel bandwidth may be referred to as a bandwidth. In an embodiment, the channel bandwidths may include 20 MHz, 40 MHz, 80 MHz, 160 MHz, 320 MHz, and 640 MHz.

The access point and the station, according to an embodiment, may detect signals received from other devices at a plurality of sub-bands constituting the frequency band. The access point and the station may determine first frequency offsets for the signal at reception sub-bands at which the signal has been detected among the sub-bands. The access point and the station may determine second frequency offsets by calibrating the first frequency offsets based on the distance of each of the reception sub-bands from the center frequency of the frequency band. The access point and the station may determine a third frequency offset for the frequency band based on the second frequency offsets.

The access point and the station, according to an embodiment, may determine the frequency offset by taking into account the difference between a frequency of a sampling clock of an analog-to-digital converter (ADC) and a frequency of a sampling clock of a digital-to-analog converter (DAC) as well as the difference between a frequency of a clock generated by a local oscillator (LO) of a transmitter and a frequency of a clock generated by an LO of a receiver.

The access point and the station, according to an embodiment, may calibrate a carrier frequency offset deviation of a reception signal according to a frequency position within a wideband channel.

The access point and the station, according to an embodiment, may determine a frequency offset that is not affected by a frequency band and a bandwidth of a reception signal.

The access point and the station, according to an embodiment, may determine a frequency offset, to which channel quality of each sub-band is reflected, by combining the calibrated carrier frequency offsets of the respective sub-bands in an in-phase and quadrature (I/Q) area.

The access point and the station, according to an embodiment, may have a diversity gain by combining the calibrated carrier frequency offsets of the respective sub-bands in an I/Q area.

For example, the access point and the station, according to an embodiment, may take into account the sampling clock offset (SCO) and carrier frequency offset (CFO) coupled effects, which appear differently according to the position away from the center frequency, at each sub-band constituting a wideband channel, and may determine an accurate frequency offset value for each sub-band, regardless of the frequency position within a channel. In addition, the access point and the station may perform appropriate coherent combining on the frequency offset values of all sub-bands at which the reception signal in the wideband channel is detected among the frequency offset values determined for each sub-band by reflecting the SCO and CFO coupled effects and may determine an accurate frequency offset value, regardless of the occupied frequency band and the bandwidth of the finally transmitted frame.

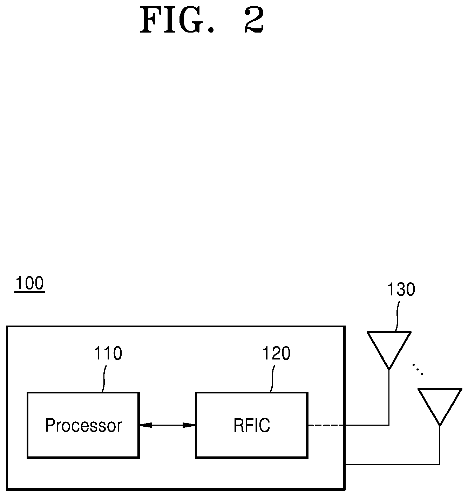

FIG. 2 illustrates a block diagram of a wireless communication device 100 according to an embodiment.

In a wireless communication system, it is difficult for clock frequencies of local oscillators (LO) respectively driven by a transmitter and a receiver to exactly match each other. Due to this, a difference may occur between a carrier frequency of a transmission signal transmitted by the transmitter and a carrier frequency of a reception signal recognized by the receiver. In accordance with aspects of the inventive concept described herein, a frequency offset that occurs for this reason is referred to as a CFO. When the CFO is present, the receiver recognizes a subcarrier of a transmission signal as being shifted by a certain frequency spacing.

On the other hand, a difference in frequencies of sampling clocks applied to analog-to-digital signal conversion may cause a frequency offset. In other words, a difference in frequencies of sampling clocks between the transmitter and the receiver may also cause a frequency offset. Specifically, a difference between a frequency of a sampling clock of an ADC and a frequency of a sampling clock of a DAC may cause a frequency offset between the transmitter and the receiver. In accordance with aspects of the inventive concept described herein, such a frequency offset is referred to as an SCO. The SCO may occur in conjunction with the CFO. Specifically, the presence of the SCO may influence the degree of the CFO. For example, the presence of the SCO may have different degrees of influence on the CFO according to the frequency band of the signal, and the CFO may have different deviations at sub-bands with different frequency positions.

The wireless communication device 100 according to aspects of the inventive concept may determine a frequency offset by taking into account both the CFO and the SCO. That is, the wireless communication device 100 may take into account that the CFO of the reception signal has different deviations for each sub-band due to the SCO effect.

Referring to FIG. 2, the wireless communication device 100 may include a processor 110, a radio frequency integrated circuit (RFIC) 120, and antennas 130. The wireless communication device 100 may further include a component for transmitting and receiving signals and data. For example, the wireless communication device 100 may further include an LO, etc.

The wireless communication device 100 may transmit or receive signals through the processor 110, the RFIC 120, and the antennas 130. When the wireless communication device 100 transmits signals, the wireless communication device 100 may operate as a transmitter, and when the wireless communication device 100 receives signals, the wireless communication device 100 may operate as a receiver.

The processor 110 according to an embodiment may detect a signal received from the transmitter through the RFIC 120 at a plurality of sub-bands constituting a frequency band. The processor 110 may determine first frequency offsets for the signal at reception sub-bands at which the signal has been detected among the sub-bands. For example, the received signal may include a training sequence that is periodically repeated in a time domain. The processor 110 may determine the first frequency offset based on the training sequence. In addition, the processor 110 may determine the first frequency offset by extracting phase information for each of the sub-bands by using an auto-correlation function (ACF).

The processor 110 may determine second frequency offsets by calibrating CFOs based on the distance of each of the reception sub-bands from the center frequency of the frequency band. The presence of the SCO may influence the degree of the CFO of the frequency components within the channel. Specifically, the SCO may cause the CFO to appear differently according to how far the subcarrier is away from the center frequency of the frequency band. Accordingly, the second frequency offset that is generated by calibrating the first frequency offset based on the distance of each of the sub-bands from the center frequency of the frequency band may be a CFO from which the SCO effect is removed. On the other hand, the distance of each of the reception sub-bands from the center frequency of the frequency band may correspond to the magnitude of the index of each of the reception sub-bands.

The processor 110 may determine a third frequency offset for the frequency band based on the second frequency offsets.

For example, the processor 110 may determine the third frequency offset by performing weighted averaging on the second frequency offsets based on weights corresponding to the amplitude of the signal measured at each of the reception sub-bands.

For example, the processor 110 may re-construct I/Q vectors for each of the reception sub-bands by using the amplitude of the signal measured at each of the reception sub-bands and the second frequency offsets. The processor 110 may obtain a vector for the frequency band by combining the I/Q vectors. The processor 110 may determine the third frequency offset by calculating the phase of the vector for the frequency band.

The processor 110 may receive data from the transmitter through the RFIC 120 by using the third frequency offset.

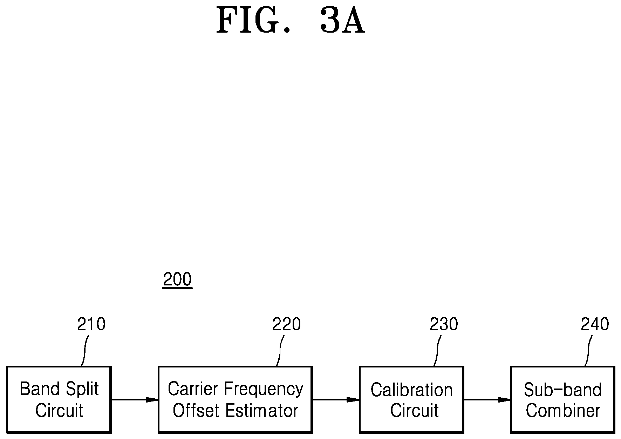

FIG. 3A illustrates a block diagram of a wireless communication device 200 according to an embodiment.

Referring to FIG. 3A, the wireless communication device 200 may include a band split circuit 210, a CFO estimator 220, a calibration circuit 230, and a sub-band combiner 240. The wireless communication device 200 may further include a component for transmitting and receiving signals and data.

The band split circuit 210 may split a channel of a reception signal. For example, when the wireless communication device 200 operates at a wideband of 320 MHz or more, the band split circuit 210 may split the channel into a plurality of sub-band units with a bandwidth of 20 MHz. For example, the band split circuit 210 may split a wideband channel signal into sub-band units based on band-split filtering.

The wireless communication device 200 of FIG. 3A is an embodiment of the wireless communication device 100 of FIG. 2. The processor 110 may include a band division circuit 210, a carrier frequency offset estimator 220, a correction circuit 230, and a sub-band combiner 240.

The CFO estimator 220 may determine the CFO of each of the sub-bands. For example, the CFO estimator 220 may determine the CFO by using the periodicity of the reception signal. As a specific example, the CFO estimator 220 may calculate phase information for each of the sub-bands by using an ACF.

The calibration circuit 230 may calibrate the CFO when the SCO is present. The degree to which the CFO is affected by the SCO may change according to the position of the sub-band in the frequency domain. The calibration circuit 230 may remove the SCO effect from the CFO.

The sub-band combiner 240 may combine the calibrated CFOs corresponding to the respective sub-bands. The sub-band combiner 240 may obtain the frequency offset for the frequency band of the reception signal by combining the calibrated CFOs corresponding to the respective sub-bands.

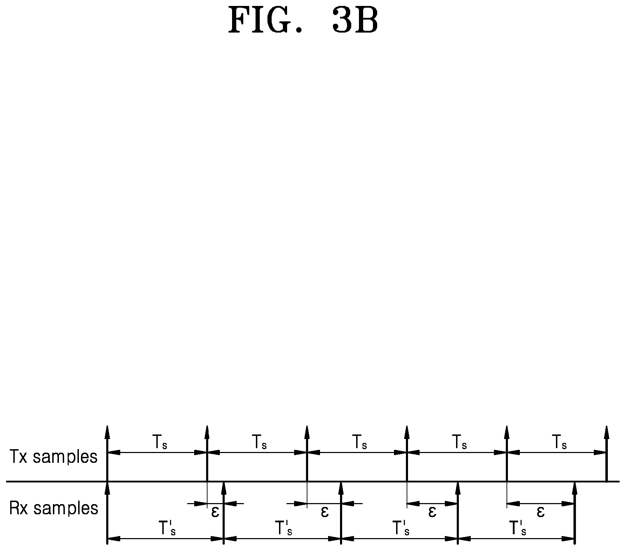

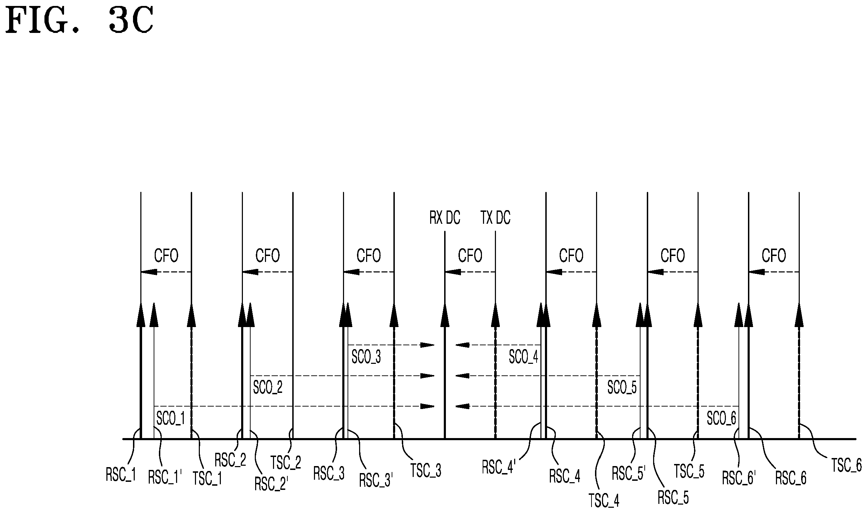

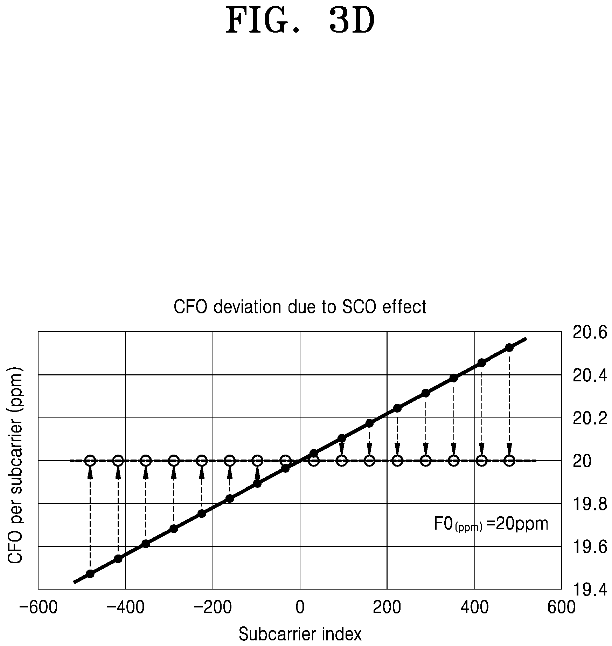

FIG. 3B is a diagram for describing the SCO. FIG. 3C illustrates the CFO and the SCO in the frequency domain. FIG. 3D illustrates an embodiment of calibrating deviation due to an SCO effect from a CFO for each of 16 sub-bands with respect to a reception signal having a bandwidth of 320 MHz in a wideband channel.

The frequency offset may be present between the transmitter and the receiver due to LO clock mismatch. This may be expressed in units of parts per million (ppm). $f_{CFO}$, which is the magnitude of the CFO of the reception signal due to the frequency offset $FO_{(ppm)}$, may depend on the center frequency $f_c$ of the wideband channel on which the receiver operates and may be expressed in units of Hz as shown in Equation 1 below.

[Equation 1]

$$f_{\text{CFO}} = f_{\text{c}} \cdot \left( \frac{FO_{(\text{ppm})}}{10^6} \right)$$

The frequency offset $FO_{(\text{ppm})}$ causes an offset in a sampling rate at which analog-to-digital signal conversion is performed between transmission and reception. Referring to FIG. 3B, the period of sampling (Tx samples) of the transmitter is $T_s$, and the period of sampling (Rx samples) of the receiver is $T_s'$. The difference between $T_s$ and $T_s'$ is $\varepsilon$.

This is referred to as an SCO or a sampling frequency offset (SFO). The magnitude of the SCO may depend on the bandwidth of the channel on which the receiver operates and may be expressed in frequency units of Hz as follows.

[Equation 2]

$$f_{\text{SCO}} = \frac{1}{T_s} - \frac{1}{T_s'} = f_{\text{BW}} - f_{\text{BW}}' = \text{BW} \cdot \left( \frac{FO_{(\text{ppm})}}{10^6} \right)$$

$T_s$ and $T_s'$ represent the sampling period at the transmitting end and the sampling period at the receiving end, respectively, and $f_{\text{BW}}$ and $f_{\text{BW}}'$ are the reciprocals of $T_s$ and $T_s'$ and represent the sampling frequencies and bandwidths of the transmitting end and the receiving end, respectively. As such, when the SCO is present, the bandwidths recognized between the transmitter and the receiver in the frequency domain are different from each other, and thus, the difference may also occur in subcarrier spacing. When the wideband channel on which the receiver operates includes a total of $N$ subcarriers, the deviation $\Delta f_{\text{subcarrier}}$ of the subcarrier spacing due to the SCO is as follows.

[Equation 3]

$$\Delta f_{\text{subcarrier}} = \frac{1}{N \cdot T_s} - \frac{1}{N \cdot T_s'} = \frac{1}{N} (f_{s,\text{BW}} - f_{s,\text{BW}}') = \frac{f_{\text{SCO}}}{N}$$

The actual degree of the CFO experienced from the reception signal by the wireless communication device (see 100 of FIG. 2) deviates from $f_{\text{CFO}}$ as $\Delta f_{\text{subcarrier}}$ is accumulated according to the distance from the center frequency for each subcarrier in the frequency domain.

Referring to FIG. 3C, a difference between a first subcarrier TSC_1 for the transmission signal and a first subcarrier RSC_1 recognized by the receiver when there is no SCO effect is a CFO. Similarly, a difference between a second subcarrier TSC_2 for the transmission signal and a second subcarrier RSC_2 recognized by the receiver when there is no SCO effect is a CFO. As such, a difference between third to sixth subcarriers TSC_3 to TSC_6 for the transmission signal and third to sixth subcarriers RSC_3 to RSC to 6 recognized by the receiver when there is no SCO effect is a CFO.

A difference occurs between a frequency position of a first subcarrier RSC_1' recognized by the receiver when there is an SCO effect and a frequency position of a first subcarrier RSC_1 recognized by the receiver when there is no SCO effect. This difference is based on a distance from a center frequency SCO_1. That is, the differences between frequency positions of second to sixth subcarriers RSC_2' to RSC_6' recognized by the receiver when there is the SCO effect and frequency positions of second to sixth subcarriers RSC_2 to RSC_6 recognized by the receiver when there is no SCO effect may change according to the distance from center frequencies SCO_2 to SCO_6 thereof, respectively. For example, as the distance from the center frequency increases, the difference between the position of the subcarrier recognized by the receiver when there is an SCO effect and the position of the subcarrier recognized by the receiver when there is no SCO effect may increase.

On the other hand, when the frequency index of the individual subcarrier is k, subcarriers are present in a range of $-N/2 \leq k < N/2$ within the channel and the center frequency corresponds to k=0. The CFO deviation due to the SCO appears differently for each subcarrier depending on the position away from the center frequency of the entire channel in accordance with a certain rule. The mathematical relationship is derived as follows.

[Equation 4]

$$f_{\text{CFO},\,k} = f_{\text{CFO}} + k \cdot \Delta f_{\text{subcarrier}} = f_{\text{CFO}} + k \cdot \frac{f_{\text{SCO}}}{N}$$

$$= f_c \cdot \left(\frac{FO_{(\text{ppm})}}{10^6}\right) + k \cdot \frac{BW}{N} \cdot \left(\frac{FO_{(\text{ppm})}}{10^6}\right) = \left(f_c + k \cdot \frac{BW}{N}\right) \cdot \left(\frac{FO_{(\text{ppm})}}{10^6}\right)$$

In Equation 4, $f_{\text{CFO},\,k}$ represents the magnitude of a CFO of a subcarrier located at an index k.

This is expressed in ppm as follows.

[Equation 5]

$$f_{\text{CFO},\,k\,(\text{ppm})} = \frac{f_{\text{CFO},\,k}}{f_c} \cdot 10^6 = \left(1 + \frac{BW}{f_c} \cdot \frac{k}{N}\right) \cdot FO_{(\text{ppm})}$$

This may also be expressed as follows.

[Equation 6]

$$f_{\text{CFO},\,k} = f_{\text{CFO}} + k \cdot \frac{f_{\text{SCO}}}{N} = (\alpha + k\delta) \cdot FO_{(\text{ppm})}$$

In Equation 6, $\alpha$ and $\delta$ are constants depending on a system environment. Because both CFO $f_{\text{CFO}}$ and SCO $f_{\text{SCO}}$ are associated with frequency offset $FO_{(\text{ppm})}$ due to LO mismatch between the transmitter and the receiver, the degree $f_{\text{CFO},\,k}$ of CFO experienced at any subcarrier position k is proportional to $FO_{(\text{ppm})}$ and linearly increases or decreases as the linear function of the frequency index k. When the determined CFO value for each sub-band and the frequency index according to the sub-band position are substituted into Equation 6, the SCO effect may be inverted and calibrated and the fundamental frequency offset $FO_{(\text{ppm})}$ may be obtained.

Referring to FIG. 3D, the wideband channel operation with frequency offsets $FO_{(\text{ppm})}$ = 20ppm and BW = 320MHz & N = 1024 & $f_c$ = 6GHz between transmission and reception is assumed. The CFO value (CFO per subcarrier) experienced by each 20-MHz sub-band within a 320-MHz channel appears in as linear deviation according to a subcarrier index with respect to 20 ppm at the center band. When the SCO effect is calibrated so as not to be affected as shown in the direction of the arrow in FIG. 3D through the relational equation described above, a frequency offset corresponding to 20 ppm may always be obtained, regardless of the position of the sub-band.

Each point in the graph indicates the CFO of the subcarrier at the center frequency position of each of 16 20-MHz sub-bands in the 320-MHz wideband channel. The index $k_m$ of the subcarrier corresponding to the center frequency at any sub-band index m is defined as follows.

[Equation 7]

$$k_m = \begin{cases} 0 & (\text{BW} = 20\text{MHz}) \\ \dfrac{10^7 N}{\text{BW}}(2m - 1) & (\text{BW} \neq 20\text{MHz} \ \text{and} \ m > 0) \\ \dfrac{10^7 N}{\text{BW}}(2m + 1) & (\text{BW} \neq 20\text{MHz} \ \text{and} \ m < 0) \end{cases}$$

$$\text{where} \quad -\left(\frac{\text{BW}}{20\text{MHz}}\right) \leq m \leq -1, \ +1 \leq m \leq +\left(\frac{\text{BW}}{20\text{MHz}}\right)$$

The value $\tilde{f}_{\text{CFO},\,m\,(\text{ppm})}$ obtained when the CFO is determined for each sub-band may be approximated as the CFO at the center frequency by the average of the subcarriers within the sub-band as follows.

[Equation 8]

$$\hat{f}_{\text{CFO},\, m\,(\text{ppm})} \approx \left(1 + \frac{\text{BW}}{f_{\text{c}}} \cdot \frac{k_m}{N}\right) \cdot FO_{(\text{ppm})}$$

Conversely, when the equation is modified to obtain the frequency offset $FO_{(\text{ppm})}$ from the CFO determined for each sub-band, the frequency offset $FO_{(\text{ppm}),m}$ determined at the sub-band of the index m may be expressed as follows.

[Equation 9]

$$FO_{(\text{ppm}),m} \approx \frac{\hat{f}_{\text{CFO},\, m\,(\text{ppm})}}{1 + \frac{\text{BW}}{f_{\text{c}}} \cdot \frac{k_m}{N}}$$

By substituting the index of the subcarrier into Equation 9, the frequency offset is expressed as follows.

[Equation 10]

$$FO_{(\text{ppm}),m} \approx \begin{cases} \hat{f}_{\text{CFO},\, m\,(\text{ppm})} & (\text{BW} = 20\text{MHz}) \\ \hat{f}_{\text{CFO},\, m\,(\text{ppm})} \left(1 - \frac{1}{1+\beta}\right) & (\text{BW} \neq 20\text{MHz}) \end{cases}$$

$$\text{where } \beta = \frac{100 f_{\text{c}\,(\text{GHz})}}{2m - 1} \text{ for } m > 0, \text{ or } \beta = \frac{100 f_{\text{c}\,(\text{GHz})}}{2m + 1} \text{ for } m < 0$$

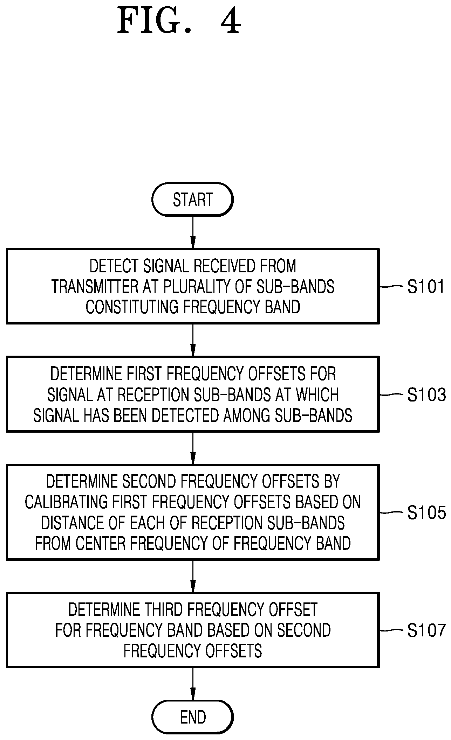

FIG. 4 illustrates an operation procedure of a wireless communication device according to an embodiment. FIG. 4 may be described with reference to FIG. 3A.

Referring to FIG. 4, in operation S101, the wireless communication device 200 detects a signal received from the transmitter at a plurality of sub-bands constituting the frequency band. For example, the bandwidth of the frequency band is 320 MHz, and the bandwidth of each of the sub-bands is 20 MHz. The bandwidths of the frequency band and the sub-bands may variously change and are not limited to the embodiment described above.

In operation S103, the wireless communication device 200 determines first frequency offsets for the signal at reception sub-bands at which the signal has been detected among the sub-bands. The first frequency offset may be the CFO described above, and the reception sub-bands refer to sub-bands at which the signal has been detected among the sub-bands constituting the frequency band.

For example, the signal received by the wireless communication device 200 may include a training sequence that is periodically repeated in the time domain, and the wireless communication device 200 may determine the first frequency offset based on the periodicity of the training sequence. In addition, the wireless communication device 200 may determine the first frequency offset by extracting phase information for each of the sub-bands from the training sequence by using an ACF.

In addition, in operation S105, the wireless communication device 200 determines second frequency offsets by calibrating the first frequency offsets based on the distance of each of the reception sub-bands from the center frequency of the frequency band. That is, the second frequency offset is a frequency offset calibrated in a direction to remove the SCO effect with respect to the first frequency offset.

As an example, the distance of each of the reception sub-bands from the center frequency of the frequency band may correspond to the magnitude of the index of each of the reception sub-bands.

In operation S107, the wireless communication device 200 determines a third frequency offset for the frequency band, for example based on the second frequency offsets.

For example, the wireless communication device 200 may determine the third frequency offset by performing weighted averaging on the second frequency offsets based on weights corresponding to the amplitude of the signal measured at each of the reception sub-bands.

For example, the wireless communication device 200 may re-construct I/Q vectors of each of the reception sub-bands by using the amplitude of the signal measured at each of the reception sub-bands and the second frequency offsets, to obtain a vector for the frequency band by combining the I/Q vectors, and may determine the third frequency offset by calculating the phase of the vector for the frequency band.

The wireless communication device 200 may receive data from the transmitter by using the third frequency offset. For example, the wireless communication device 200 may receive data by calibrating the frequency of the LO by using the third frequency offset. As another example, the wireless communication device 200 may receive data by calibrating the modulation of the reception signal by using the third frequency offset. The wireless communication device 200 may receive data from the transmitter in various methods by using the third frequency offset, and is not limited to the embodiments described above.

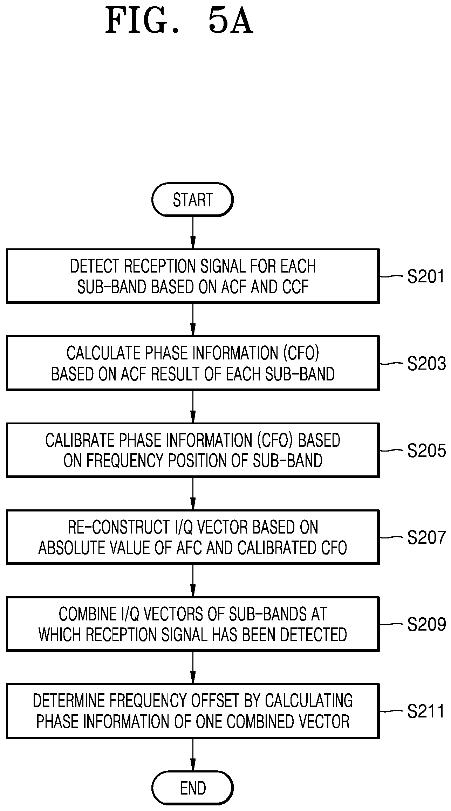

FIG. 5A illustrates an operation procedure of a wireless communication device according to an embodiment. FIG. 5A may be described with reference to FIG. 2.

Referring to FIG. 5A, in operation S201, the wireless communication device 100 may detect a reception signal for each sub-band based on an ACF and a cross-correlation function (CCF). For example, the wireless communication device 100 may split a wideband channel into sub-bands each having a bandwidth of 20 MHz and may calculate and update the ACF and the CCF for each sub-band. When the ACF and CCF values exceed a certain threshold, the wireless communication device 100 may consider that the reception signal has been detected at the corresponding sub-band, and a frame reception procedure through synchronization timing determination and frequency offset estimation may be started.

In operation S203, the wireless communication device 100 may calculate phase information (CFO) based on the ACF result of each sub-band. That is, the wireless communication device 100 does not combine the ACF of each of the sub-bands, instead the wireless communication device 100 first calculates the CFO value for each sub-band by extracting phase information from each ACF. The nomenclature "phase information (CFO)" may indicate that the phase information represents a carrier frequency offset (CFO).

In operation S205, the wireless communication device 100 may calibrate phase information (CFO) based on the frequency position of the sub-band.

In operation S207, the wireless communication device 100 may re-construct an I/Q vector based on the absolute value of the AFC and the calibrated CFO.

In operation S209, the wireless communication device 100 may combine I/Q vectors of sub-bands at which the reception signal has been detected.

In operation S211, the wireless communication device 100 may determine a frequency offset by calculating phase information of one combined vector.

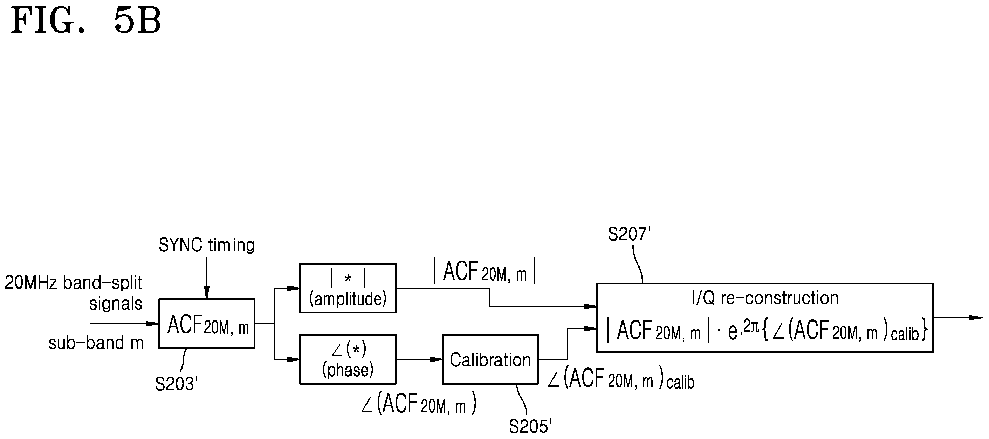

FIG. 5B illustrates an operation procedure of a wireless communication device at an $m^{th}$ sub-band, according to an embodiment. FIG. 5B may be described with reference to FIG. 5A.

Operations S203', S205', and S207' may correspond to operations S203, S205, and S207 in FIG. 5A, respectively.

The wireless communication device 100 may split a frequency band of a reception signal. For example, the wireless communication device 100 may split the frequency band into sub-bands each having a bandwidth of 20 MHz.

Referring to FIG. 5B, in operation S203', the wireless communication device 100 may calculate phase information ($\angle(ACF_{20M,m})$) of the $m^{th}$ sub-band based on the ACF result ($ACF_{20M,m}$) of the $m^{th}$ sub-band. The wireless communication device 100 may obtain the amplitude and phase of the reception signal as the ACF result. For example, the wireless communication device 100 may extract a synchronization timing from a reception signal including a training sequence and may calculate phase information (CFO) of an $m^{th}$ sub-band by using the synchronization timing.

In operation S205', the wireless communication device 100 may calibrate the phase information ($\angle(ACF_{20M,m})$) into phase information ($\angle(ACF_{20M,m})_{calib}$) by taking into account the SCO and CFO coupled effects based on the frequency position of the $m^{th}$ sub-band.

In operation S207', the wireless communication device 100 may re-construct a phasor vector ($|ACF20M, m|* e^{j2\pi\{\angle(ACF20M,m)calib\}}$) of an I/Q area by using the amplitude of the reception signal, which is one of the ACF results, and the calibrated phase information ($\angle(ACF_{20M,m})_{calib}$).

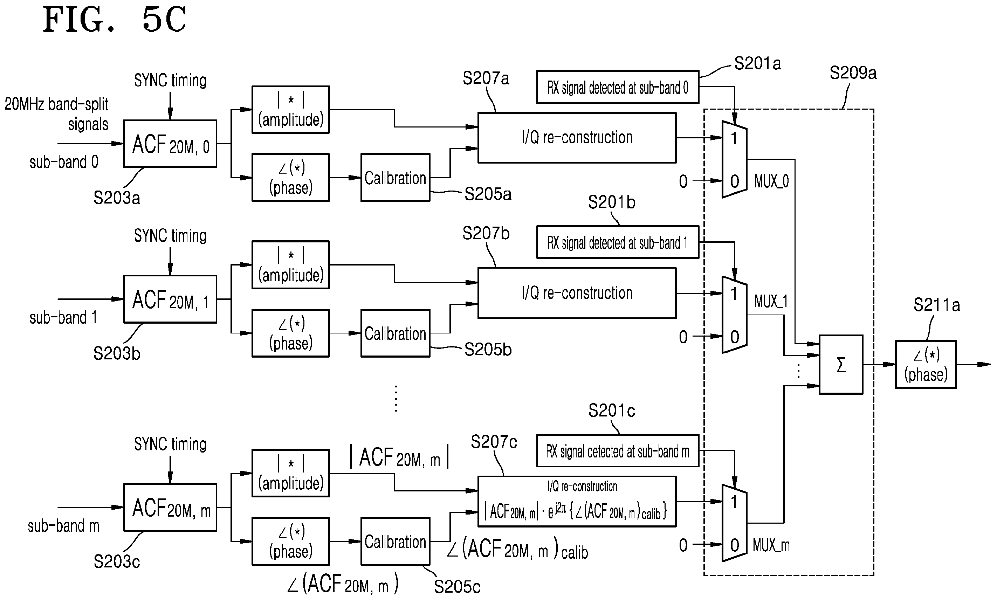

FIG. 5C illustrates an operation of a wireless communication device at each sub-band and a method of combining a plurality of sub-bands, according to an embodiment. FIG. 5C may be described with reference to FIGS. 5A and 5B and redundant descriptions may be omitted.

Referring to FIG. 5C, operations S203a, S203b, and S203c may correspond to operation S203'. Operations S205a, S205b, and S205c may correspond to operation S205'. Operations S207a, S207b, and S207c may correspond to operation S207'. Operations S201a, S201b, and S201c may correspond to operation S201.

In operation S201a, the wireless communication device 100 may detect a reception signal at a zeroth sub-band. For example, the wireless communication device 100 may detect a reception signal at the zeroth sub-band based on an ACF and a CCF.

In operation S201b, the wireless communication device 100 may detect a reception signal at a first sub-band. For example, the wireless communication device 100 may detect a reception signal at the first sub-band based on an ACF and a CCF.

In operation S201c, the wireless communication device 100 may detect a reception signal at an $m^{th}$ sub-band. For example, the wireless communication device 100 may detect a reception signal at the $m^{th}$ sub-band based on an ACF and a CCF.

In operation S209a, the wireless communication device 100 may combine I/Q vectors of sub-bands at which the reception signal has been detected. For example, when the reception signal is detected at the zeroth sub-band, the wireless communication device 100 may use a first MUX MUX_0 to select a phasor vector ($|ACF20M, 0| *e^{j2\pi\{\angle(ACF20M,0)_{calib}\}}$) of an I/Q area of the zeroth sub-band. In this manner, the wireless communication device 100 may select phasor vectors of sub-bands at which the reception signal has been detected. The wireless communication device 100 may generate one phasor vector by combining all the selected phasor vectors.

In operation S211a, the wireless communication device 100 may determine the frequency offset of the frequency band by calculating phase information of one combined vector.

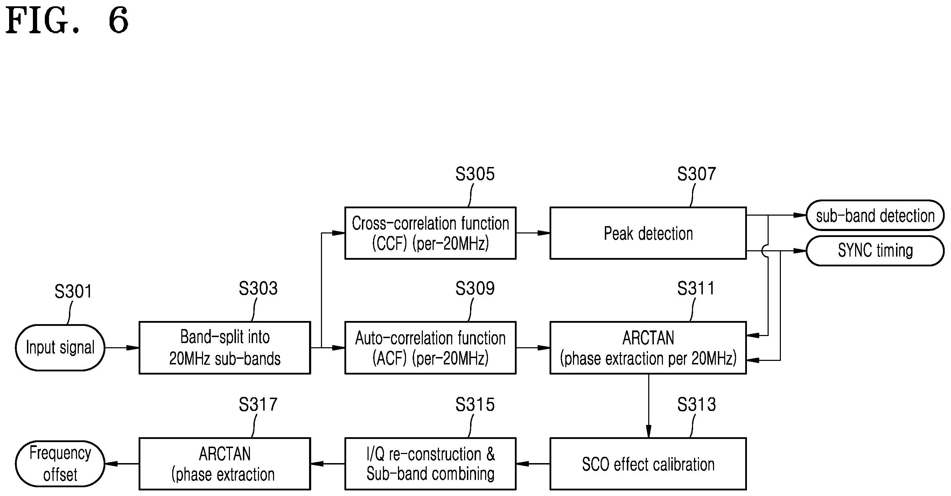

FIG. 6 illustrates a method of detecting a reception signal at a sub-band, obtaining a synchronization timing, and determining a frequency offset based on the synchronization timing and the reception signal, according to an embodiment. FIG. 6 may be described with reference to FIG. 2.

Referring to FIG. 6, in operation S301, the wireless communication device 100 may receive a signal.

In operation S303, the wireless communication device 100 may split a frequency band of the received signal into sub-bands each having a bandwidth of 20 MHz.

In operation S305, the wireless communication device 100 may detect a reception signal at a sub-band by using a CCF and may obtain a synchronization timing of the reception signal. For example, in operation S307, by detecting a peak of a periodic reception signal, the reception signal may be detected and the synchronization timing of the reception signal may be obtained.

In operation S309, the wireless communication device 100 may extract phase information for each of the sub-bands by using an ACF. For example, in operation S311, the phase information for each of the sub-bands may be extracted by using an ACF result and an ARCTAN function based on the synchronization timing. That is, the wireless communication device 100 may calculate an ACF value for each sub-band corresponding to a synchronization timing point.

In operation S313, the wireless communication device 100 may calibrate the extracted phase information by taking into account the SCO effect. When the wireless communication device 100 calibrates the deviation caused by the SCO from the measured CFO value according to the position of each sub-band from the center frequency within the channel, the wireless communication device 100 may determine a correct frequency offset, regardless of the position of the sub-band and the bandwidth of the reception signal.

In operation S315, the wireless communication device 100 may perform I/Q reconstruction and sub-band combining. In operation S317, the wireless communication device 100 may extract phase information for the frequency offset through an I/Q area phasor vector and an ARCTAN function for the combined sub-bands.

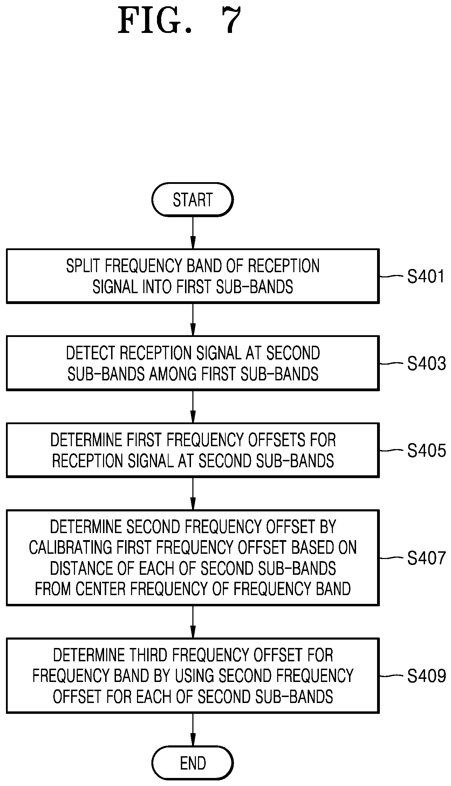

FIG. 7 illustrates an operation procedure of a wireless communication device according to an embodiment. FIG. 7 may be described with reference to FIG. 2.

Referring to FIG. 7, in operation S401, the wireless communication device 100 may split a frequency band of a reception signal into first sub-bands.

In operation S403, the wireless communication device 100 may detect a reception signal at second sub-bands among the first sub-bands.

In operation S405, the wireless communication device 100 may determine first frequency offsets for the reception signal at the second sub-bands.

For example, the reception signal may include a training sequence that is periodically repeated in the time domain, and the wireless communication device 200 may determine the first frequency offset based on the periodicity of the training sequence. The wireless communication device 100 may determine the first frequency offset by extracting phase information for each of the second sub-bands from the training sequence based on an ACF.

For example, the wireless communication device 100 may obtain synchronization timings of the reception signal for each of the second sub-bands and may further determine the first frequency offset by extracting phase information for each of the second sub-bands from the training sequence based on the synchronization timings.

In operation S407, the wireless communication device 100 may determine the second frequency offset by calibrating the first frequency offset based on the distance of each of the second sub-bands from the center frequency of the frequency band.

In operation S409, the wireless communication device 100 may determine a third frequency offset for the frequency band by using the second frequency offset for each of the second sub-bands. For example, the wireless communication device 100 may determine the third frequency offset by performing weighted averaging on the second frequency offsets according to the amplitude of the reception signal for each of the second sub-bands.

For example, the wireless communication device 100 may re-construct a plurality of I/Q vectors corresponding to the second sub-bands by using the amplitude of the reception signal for each of the second sub-bands and the second frequency offset, to obtain one vector by combining the I/Q vectors, and may determine the third frequency offset by calculating the phase of the one vector.

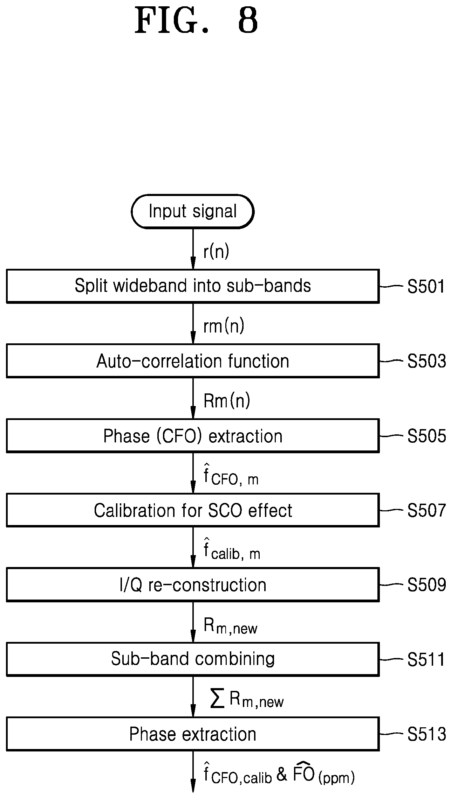

FIG. 8 illustrates signals that are processed by a wireless communication device, according to an embodiment. FIG. 8 may be described with reference to FIG. 2.

The wireless communication device 100 may perform synchronization by detecting a preamble of a frame signal for a signal reception operation and determining a frequency offset. The preamble of the frame signal may include a training sequence in which a sample array of a certain length is periodically repeated in the time domain. When s(n) represents the reception signal of the training sequence repeated at $N_L$ sample intervals defined by a WLAN standard, the relationship shown in Equation 11 below may be established in an ideal channel environment.

[Equation 11]

$$s(n) = s(n - N_L)$$

A CFO $f_{CFO}$ is present between transmission and reception, and an actual reception signal considering an additive white Gaussian noise (AWGN) channel may be expressed as Equation 2 below.

[Equation 12]

$$r(n) = s(n)e^{j2\pi f_{CFO} \cdot (nT_s)} + \eta(n)$$

In Equation 12, s(n) represents an ideal reception signal, $f_{CFO}$ represents a CFO, $\eta(n)$ represents noise, and $T_s$ represents a sampling period.

Referring to FIG. 8, in operation S501, the wireless communication device 100 may split a wideband channel into sub-bands. The wireless communication device 100 may split a channel of a reception signal r(n) into m sub-bands. For example, the wireless communication device 100 may split the reception signal r(n) into units of 20 MHz by filtering the reception signal r(n) in the time domain. A signal $r_m(n)$ corresponding to an $m^{th}$ sub-band may be expressed as Equation 13 below.

[Equation 13]

$$r_m(n) = s_m(n)e^{j2\pi f_{CFO,m} \cdot (nT_s)} + \eta_m(n)$$

In Equation 13, $f_{CFO,m}$ represents a CFO experienced with respect to the signal of the $m^{th}$ sub-band by the wireless communication device 100.

In operation S503, the wireless communication device 100 may process the signal $r_m(n)$ corresponding to the $m^{th}$ sub-band by using an ACF. For example, the wireless communication device 100 may calculate an ACF corresponding to a delay equal to a sample repetition period $N_L$ of the training sequence. The ACF may be expressed as Equation 14 below.

[Equation 14]

$$R_m(n) = \sum_{i=0}^{L_{auto}} r_m(n - i)r_m^*(n - N_L - i)$$

$$= \sum_{i=0}^{L_{auto}} |s_m(n - i)|^2 e^{j2\pi f_{CFO,m}(N_L T_s)} + \zeta_m(n)$$

In Equation 14, $L_{auto}$ represents a buffer (window) length of accumulated samples for which the ACF is calculated.

In operation S505, the wireless communication device 100 may extract phase information (CFO) corresponding to the $m^{th}$ sub-band from the ACF. For example, the wireless communication device 100 may determine the CFO of the sub-band from the ACF value corresponding to the synchronization timing point $n = n_{SYNC}$ as follows.

[Equation 15]

$$\hat{f}_{\text{CFO},m} \approx \frac{1}{N_L T_s} \cdot \frac{1}{2\pi} \arg \left( R_m(n_{\text{SYNC}}) \right)$$

In Equation 15, $\hat{f}_{\text{CFO},m}$ represents the CFO of the $m^{th}$ sub-band. $\hat{f}_{\text{CFO},m}$ includes a certain proportion of deviation that occurs due to the SCO according to the position of the sub-band away from the center frequency within the entire wideband channel.

In operation S507, the wireless communication device 100 may calibrate the SCO effect. The wireless communication device 100 may obtain the determined CFO value in an environment without SCO by reversely calibrating the SCO effect, as shown in Equation 16 below.

[Equation 16]

$$\hat{f}_{\text{calib},m} \approx \begin{cases} \hat{f}_{\text{CFO},m} & (\text{BW} = 20\text{MHz}) \\ \hat{f}_{\text{CFO},m} \left( 1 - \frac{1}{1+\beta} \right) & (\text{BW} \neq 20\text{MHz}) \end{cases}$$

$$\text{where } \beta = \frac{100 f_{c\,(\text{GHz})}}{2m-1} \text{ for } m > 0, \text{ or } \beta = \frac{100 f_{c\,(\text{GHz})}}{2m+1} \text{ for } m < 0$$

In Equation 16, m may represent an index according to the position of each 20-MHz sub-band within the wideband channel. $\hat{f}_{\text{calib},m}$ represents the calibrated CFO value. $\hat{f}_{\text{calib},m}$ may be the CFO of the channel center frequency generated by the fundamental frequency offset due to LO mismatch at the transmitting and receiving ends, regardless of the bandwidth of the reception signal and the position of the sub-band.

In operation S509, the wireless communication device 100 may re-construct the I/Q value for each sub-band by using the calibrated CFO value. The re-constructed phasor vector for each sub-band may be expressed as Equation 17 below.

[Equation 17]

$$R_{m,\text{new}} \overset{\text{def}}{=} \begin{cases} |R_m(n_{\text{SYNC}})| \, e^{j2\pi \hat{f}_{\text{calib},m}(N_L T_s)} \\ 0 \end{cases}$$

if m-th sub-band is detected otherwise

In operation S511, the wireless communication device 100 may combine the calibrated CFO for each sub-band. For example, when the reception signal is a wideband signal occupying a plurality of 20 MHz sub-bands, a more accurate CFO value may be obtained by combining the calibrated CFO for each sub-band. In order to reflect the effect of different channel quality for each sub-band rather than simply performing arithmetic averaging on the CFO values for each sub-band, the wireless communication device 100 may re-construct and combine the phasor vectors in the I/Q area. That is, the wireless communication device 100 may obtain one phasor vector for all sub-bands within the channel by coherently combining vectors in a complex dimension.

In operation S513, the wireless communication device 100 may extract phase information from the phasor vector. That is, the wireless communication device 100 may determine the CFO obtained as an average for the entire channel band as follows.

[Equation 18]

$$\hat{f}_{\text{CFO, calib}} \approx \frac{1}{N_L T_s} \cdot \frac{1}{2\pi} \arg\left(\sum_{m=0}^{M-1} R_{m.\text{new}}\right)$$

where M = BW/20MHz

$\hat{f}_{\text{CFO,calib}}$ represents an offset of a pure carrier in which the effect due to the SCO has been calibrated, and the wireless communication device 100 may determine the frequency offset as shown in Equation 19 below.

[Equation 19]

$$\widehat{FO}_{\text{(ppm)}} = 10^6 \cdot \left(\frac{\hat{f}_{\text{CFO, calib}}}{f_c}\right)$$

$f_c$ represents the center frequency of the frequency band.

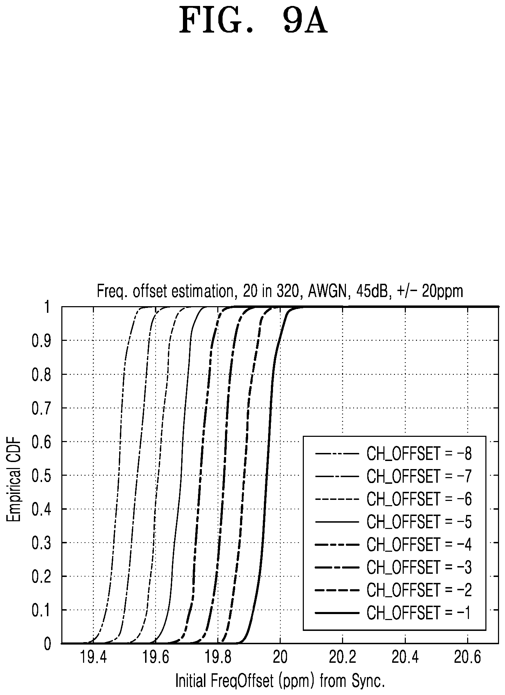

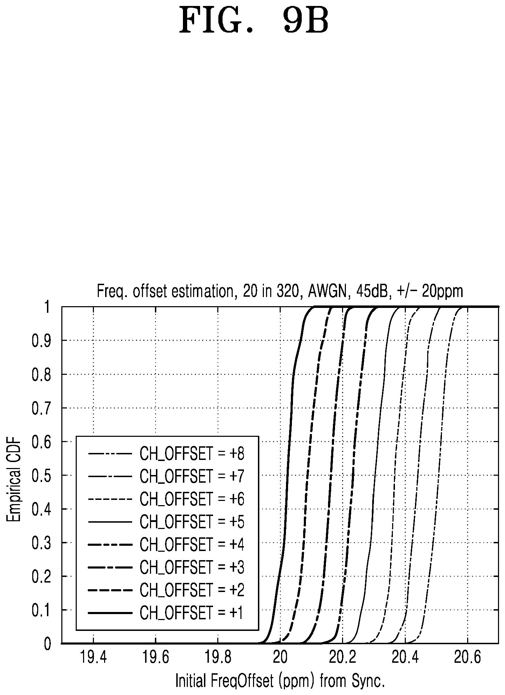

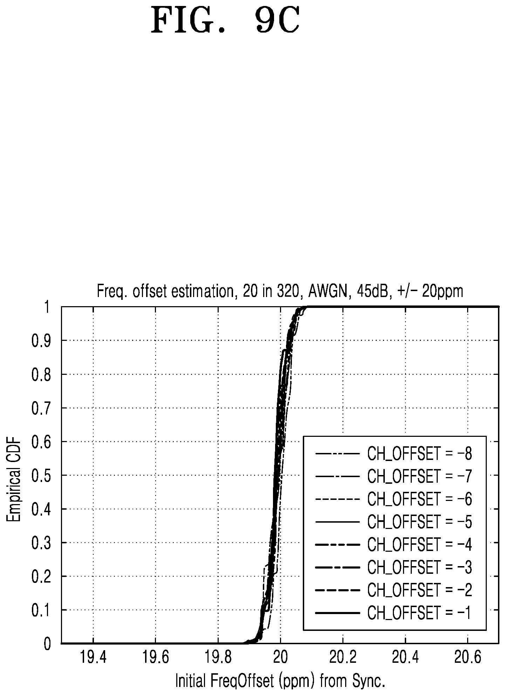

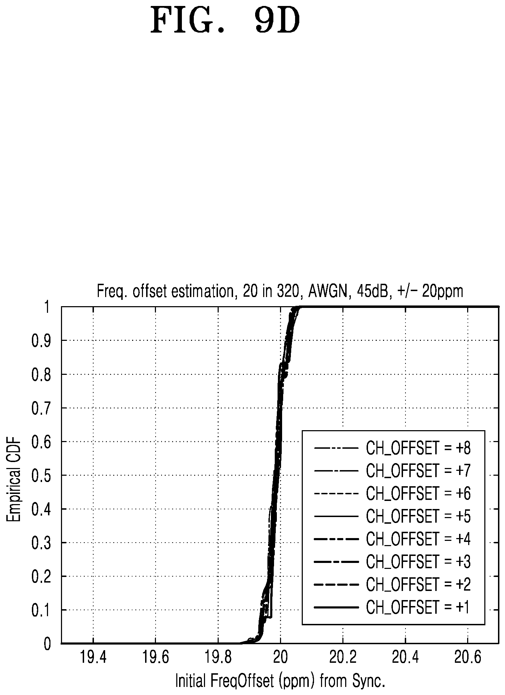

FIGS. 9A and 9B illustrate frequency offsets in which an SCO effect is not calibrated in an AWGN channel. FIGS. 9C and 9D illustrate frequency offsets in which an SCO effect is calibrated in an AWGN channel, according to an embodiment.

When determining the frequency offset of the reception signal in the wideband channel, the wireless communication device (see 100 of FIG. 2) according to the inventive concept may determine an accurate frequency offset value by calibrating the deviation of the CFO caused by the CFO and SCO coupled effects. The wireless communication device 100 may accurately predict and calibrate the deviation that occurs linearly due to the distance away from the center frequency of the wideband channel and may thus always determine a consistent frequency offset value for signals received over some or all of the sub-bands, regardless of the bandwidth and the frequency position. Accordingly, the wireless communication device 100 may ensure correct synchronization and reception performance.

In FIGS. 9A to 9D, it is assumed that a reception signal is present at only one specific 20-MHz sub-band in a 320-MHz wideband channel and a frequency offset of 20 ppm is present between transmission and reception.

FIGS. 9A and 9B illustrate the distribution of the CFO in the case of not taking into account the SCO effect in the AWGN channel as a cumulative distribution function (CDF). That is, this represents a case where the CFO is not calibrated. The position of the 20-MHz sub-band at which the reception signal is present has one of values within the range of -8≤CH_OFFSET≤-1 and +1≤CH_OFFSET≤+8 with respect to the center frequency of the 320-MHz channel according to the CH_OFFSET value. FIG. 9A illustrates the case of - 8≤CH_OFFSET≤-1, and FIG. 9B illustrates the case of +1≤CH_OFFSET≤+8.

FIGS. 9C and 9D illustrate the distribution of the CFO in the case of taking into account the SCO effect in the AWGN channel as a CDF. That is, this represents a case where the CFO is calibrated. FIG. 9C illustrates the case of -8≤CH_OFFSET≤-1, and FIG. 9D illustrates the case of +1≤CH_OFFSET≤+8.

Referring to FIGS. 9A to 9D, when the CFO is not calibrated, the frequency offset is gradually shifted away from 20 ppm according to the frequency position. Specifically, in an environment where the frequency offset of 20 ppm is present, the CFO measured from the reception signal for each sub-band appears with a certain deviation according to the position CH_OFFSET of the frequency band due to the CFO and SCO coupled effects. The wireless communication device 100 may calibrate the deviation by using the mathematical relationship between the frequency offset and the CFO and SCO.

It may be confirmed that, when the CFO is calibrated by taking into account the SCO effect, the frequency offsets are all uniform at around 20 ppm. That is, the wireless communication device 100 may calibrate the CFO to accurately determine the original frequency offset of 20 ppm between transmission and reception, regardless of the frequency band position of the sub-band at which the signal is received.

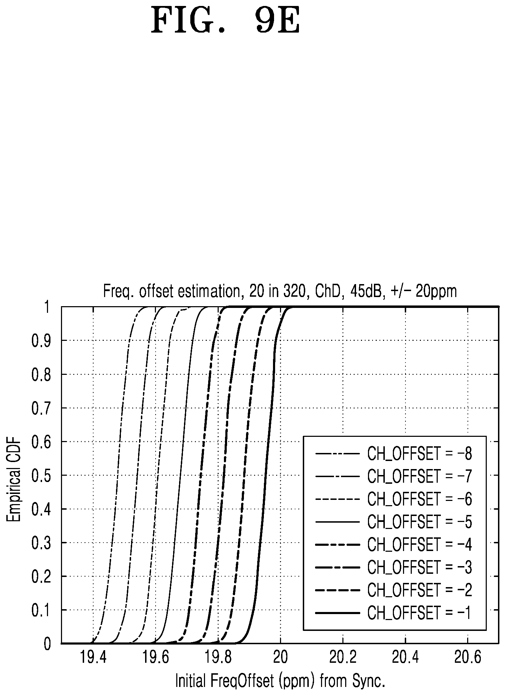

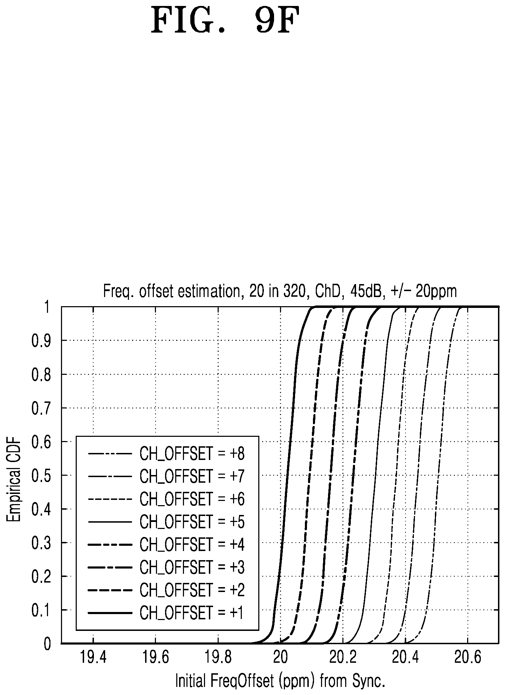

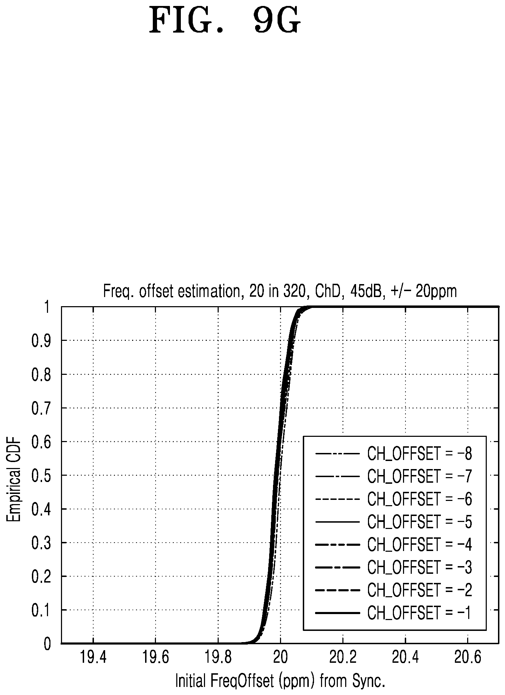

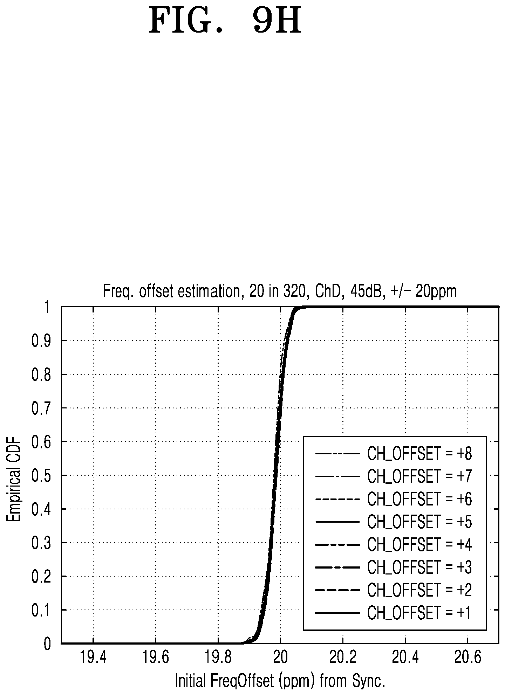

FIGS. 9E and 9F illustrate frequency offsets in which an SCO effect is not calibrated in a fading channel, according to an embodiment. FIGS. 9G and 9H illustrate frequency offsets in which an SCO effect is calibrated in a fading channel, according to an embodiment.

In FIGS. 9E to 9H, it is assumed that a reception signal is present at only one specific 20-MHz sub-band in a 320-MHz wideband channel and a frequency offset of 20 ppm is present between transmission and reception.

FIGS. 9E and 9F illustrate the distribution of the CFO in the case of not taking into account the SCO effect in the fading channel as a CDF. That is, this represents a case where the CFO is not calibrated. The position of the 20-MHz sub-band at which the reception signal is present has one of values within the range of -8≤CH_OFFSET≤-1 and +1≤CH_OFFSET≤+8 with respect to the center frequency of the 320-MHz channel according to the CH_OFFSET value. FIG. 9E illustrates the case of -8≤CH_OFFSET≤-1, and FIG. 9F illustrates the case of +1≤CH_OFFSET≤+8.

FIGS. 9G and 9H illustrate the distribution of the CFO in the case of taking into account the SCO effect in the fading channel as a CDF. That is, this represents a case where the CFO is calibrated. FIG. 9G illustrates the case of -8≤CH_OFFSET≤-1, and FIG. 9H illustrates the case of +1≤CH_OFFSET≤+8.

Referring to FIGS. 9E and 9F, in an environment where the frequency offset of 20 ppm is present, the CFO measured from the reception signal for each sub-band appears with a certain deviation according to the position CH_OFFSET of the frequency band due to the CFO and SCO coupled effects. Referring to FIGS. 9G and 9H, it may be confirmed that, when the CFO is calibrated by taking into account the SCO effect, the CFOs are all uniform at around 20 ppm.

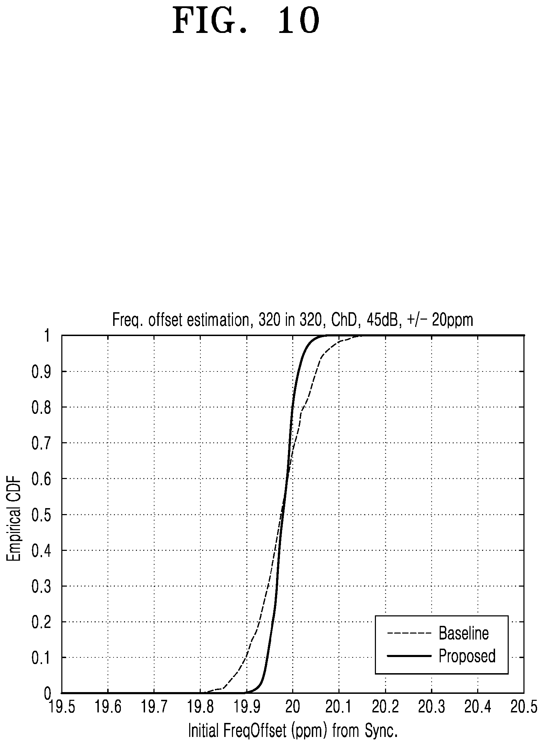

FIG. 10 illustrates a frequency offset of a frequency band, at which an SCO effect is not calibrated, and a frequency offset of a frequency band, at which an SCO effect is calibrated, in a fading channel.

When a reception signal is present over an entire 320-MHz wideband channel between transmission and reception with a frequency offset of 20 ppm, the CFO deviation due to the SCO effect appears differently for each sub-band. Even when the CFO of each sub-band is not calibrated (baseline), an average frequency offset may be approximated to 20 ppm. However, because the quality of the channel for each sub-band is different in the fading channel, the CFO deviation in a specific frequency band undergoes weighted averaging with a higher proportion, which may cause the determined value of the frequency offset to be biased. Because the wireless communication device (see 100 of FIG. 2) calibrates the CFO deviation due to the SCO for each sub-band and the calibrated CFO deviation is vector-combined in the I/Q area to determine the average frequency offset, a more accurate result may be obtained, regardless of the influence of different channel qualities for each frequency.

Referring to FIG. 10, for a reception signal having a frequency offset of 20 ppm and a bandwidth of 320 MHz, a frequency offset value when an CFO is calibrated (proposed) has a smaller standard deviation than a baseline in the fading channel.

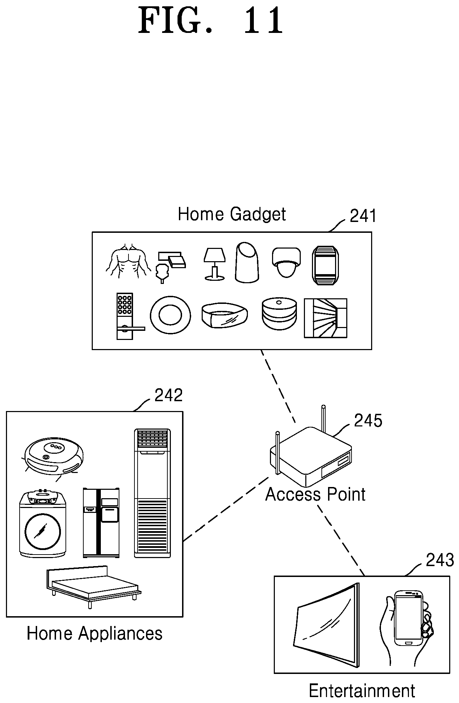

FIG. 11 is a diagram illustrating examples of devices for wireless communication, according to an embodiment.

Specifically, FIG. 11 illustrates an Internet-of-things (IoT) network system including a home gadget 241, home appliances 242, an entertainment device 243, and an access point 245.

In some embodiments, as described above, the devices for wireless communication illustrated in FIG. 10 may take into account the SCO and CFO coupled effects, which appear differently according to the position away from the center frequency, at each sub-band constituting the wideband channel, and may determine an accurate frequency offset value for each sub-band, regardless of the frequency position within the channel.

In addition, the devices for wireless communication illustrated in FIG. 10 may perform appropriate coherent combining on the frequency offset values of all sub-bands at which the reception signal in the wideband channel is detected among the frequency offset values determined for each sub-band by reflecting the SCO and CFO coupled effects and may determine an accurate frequency offset value, regardless of the occupied frequency band and the bandwidth of the finally transmitted frame.

**Claims**

1. An operating method of a receiver (100; 200) that communicates with a transmitter (100; 200) through a frequency band, the operating method comprising:

   detecting (S101; S403) a signal received from the transmitter (100; 200) at a plurality of sub-bands constituting the frequency band;
   determining (S103; S405) first frequency offsets for the signal at reception sub-bands at which the signal has been detected among the plurality of sub-bands;
   determining (S105; S407) second frequency offsets by calibrating carrier frequency offsets based on a distance of each of the reception sub-bands from a center frequency of the frequency band; and
   determining (S107; S409) a third frequency offset for the frequency band based on the second frequency offsets,
   wherein the determining (S107; S409) of the third frequency offset comprises determining the third frequency offset by performing weighted averaging on the second frequency offsets based on weights corresponding to an amplitude of the signal measured at each of the reception sub-bands.

2. An operating method of a receiver (100; 200) that communicates with a transmitter (100; 200) through a frequency band, the operating method comprising:

   detecting (S101; S403) a signal received from the transmitter (100; 200) at a plurality of sub-bands constituting the frequency band;

determining (S103; S405) first frequency offsets for the signal at reception sub-bands at which the signal has been detected among the plurality of sub-bands;

determining (S105; S407) second frequency offsets by calibrating carrier frequency offsets based on a distance of each of the reception sub-bands from a center frequency of the frequency band; and

determining (S107; S409) a third frequency offset for the frequency band based on the second frequency offsets, wherein the determining (S107; S409) of the third frequency offset comprises:

> re-constructing (S315) in-phase/quadrature, I/Q, vectors for each of the reception sub-bands by using an amplitude of the signal measured at each of the reception sub-bands and the second frequency offsets;
> obtaining a vector for the frequency band by combining the I/Q vectors; and
> determining the third frequency offset by calculating a phase of the vector for the frequency band.

3. The operating method of claim 1 or 2, wherein the signal comprises a training sequence that is periodically repeated in a time domain, and

the determining (S103; S405) of the first frequency offsets comprises determining the first frequency offset based on periodicity of the training sequence.

4. The operating method of claim 3, wherein the determining (S103; S405) of the first frequency offsets comprises determining the first frequency offset by extracting (S203; S309; 505) phase information for each of the plurality of sub-bands from the training sequence by using an auto-correlation function, ACF.

5. The operating method of any one of claims 1 to 4, wherein the distance of each of the reception sub-bands from the center frequency of the frequency band corresponds to a magnitude of an index of each of the reception sub-bands.

6. The operating method of any one of claims 1 to 5, further comprising:
receiving data from the transmitter (100; 200) by using the third frequency offset.

7. The operating method of any one of claims 1 to 6, wherein a bandwidth of the frequency band is 320 MHz, and a bandwidth of each of the plurality of sub-bands is 20 MHz.

8. An operating method of a receiver (100; 200) that communicates with a transmitter (100; 200) through a frequency band, the operating method comprising:

> detecting (S101; S403) a signal received from the transmitter (100; 200) at a plurality of sub-bands constituting the frequency band, , wherein the signal for each sub-band is detected (S201) based on an auto-correlation function, ACF, and a cross-correlation function, CCR;
> determining (S103; S405) first frequency offsets for the signal at reception sub-bands at which the signal has been detected among the plurality of sub-bands;
> determining (S105; S407) second frequency offsets by calibrating carrier frequency offsets based on a distance of each of the reception sub-bands from a center frequency of the frequency band;
> calculating (S203) phase information based on a ACF result of each sub-band;
> calibrating (S205) phase information based on a frequency position of the sub-band;
> re-constructing (S207) an in-phase/quadrature, I/Q, vector based on the absolute value of the ACF and the calibrated phase information; and
> combining (S209) I/Q vectors of sub-bands at which the signal has been detected, and
> determining (S211) a third frequency offset by calculating phase information of one combined vector.

9. The operating method of claim 4, wherein the ACF corresponds to a delay equal to a sample repetition period of the training sequence.

10. The operating method of claim 9, further comprising:

> obtaining a calibrated carrier frequency offset, CFO, value by reversely calibrating (S507) a sampling clock offset, SCO; and
> re-constructing (S509) an in-phase/quadrature, I/Q, value for each sub-band using the calibrated CFO value.

11. The operating method of any one of claims 1 to 10, further comprising:
splitting (S501) a wideband channel into sub-bands.

**12.** A receiver for communicating with a transmitter (100; 200) through a frequency band, the receiver (100; 200) comprising:

a radio frequency integrated circuit, RFIC, (120); and
a processor (110) configured to perform the method of any one of claims 1 to 11, and
wherein the signal received from the transmitter (100; 200) is received through the RFIC (120).

**Patentansprüche**

**1.** Betriebsverfahren eines Empfängers (100; 200), der mit einem Sender (100; 200) über ein Frequenzband kommuniziert, wobei das Betriebsverfahren umfasst:

Detektieren (S101; S403) eines von dem Sender (100; 200) empfangenen Signals in einer Vielzahl von Unterbändern, die das Frequenzband bilden;
Bestimmen (S103; S405) erster Frequenzoffsets für das Signal in Empfangsunterbändern, unter der Vielzahl von Unterbändern, in denen das Signal detektiert worden ist;
Bestimmen (S105; S407) zweiter Frequenzoffsets durch Kalibrieren von Trägerfrequenzoffsets auf der Grundlage eines Abstands jedes der Empfangsunterbänder von einer Mittenfrequenz des Frequenzbands; und
Bestimmen (S107; S409) eines dritten Frequenzoffsets für das Frequenzband auf der Grundlage der zweiten Frequenzoffsets,
wobei das Bestimmen (S107; S409) des dritten Frequenzoffsets das Bestimmen des dritten Frequenzoffsets durch Durchführen einer gewichteten Mittelung der zweiten Frequenzoffsets auf der Grundlage von Gewichten umfasst, die einer an jedem der Empfangsunterbänder gemessenen Amplitude des Signals entsprechen.

**2.** Betriebsverfahren eines Empfängers (100; 200), der mit einem Sender (100; 200) über ein Frequenzband kommuniziert, wobei das Betriebsverfahren umfasst:

Detektieren (S101; S403) eines von dem Sender (100; 200) empfangenen Signals in einer Vielzahl von Unterbändern, die das Frequenzband bilden;
Bestimmen (S103; S405) erster Frequenzoffsets für das Signal in Empfangsunterbändern, unter der Vielzahl von Unterbändern, in denen das Signal detektiert worden ist;
Bestimmen (S105; S407) zweiter Frequenzoffsets durch Kalibrieren von Trägerfrequenzoffsets auf der Grundlage eines Abstands jedes der Empfangsunterbänder von einer Mittenfrequenz des Frequenzbands; und
Bestimmen (S107; S409) eines dritten Frequenzoffsets für das Frequenzband auf der Grundlage der zweiten Frequenzoffsets,
wobei das Bestimmen (S107; S409) des dritten Frequenzoffsets umfasst:

Rekonstruieren (S315) von In-Phase/Quadratur, I/Q,-Vektoren für jedes der Empfangsunterbänder unter Verwendung einer an jedem der Empfangsunterbänder gemessenen Amplitude des Signals und der zweiten Frequenzoffsets;
Erhalten eines Vektors für das Frequenzband durch Kombinieren der I/Q-Vektoren; und
Bestimmen des dritten Frequenzoffsets durch Berechnen einer Phase des Vektors für das Frequenzband.

**3.** Betriebsverfahren nach Anspruch 1 oder 2, wobei das Signal eine Trainingssequenz umfasst, die in einem Zeitbereich periodisch wiederholt wird, und
das Bestimmen (S103; S405) der ersten Frequenzoffsets das Bestimmen des ersten Frequenzoffsets auf der Grundlage einer Periodizität der Trainingssequenz umfasst.

**4.** Betriebsverfahren nach Anspruch 3, wobei das Bestimmen (S103; S405) der ersten Frequenzoffsets das Bestimmen des ersten Frequenzoffsets durch Extrahieren (S203; S309; 505) von Phaseninformation für jedes der Vielzahl von Unterbändern aus der Trainingssequenz unter Verwendung einer Autokorrelationsfunktion (ACF) umfasst.

**5.** Betriebsverfahren nach einem der Ansprüche 1 bis 4, wobei der Abstand jedes der Empfangsunterbänder von der Mittenfrequenz des Frequenzbands einem Betrag eines Index jedes der Empfangsunterbänder entspricht.

**6.** Betriebsverfahren nach einem der Ansprüche 1 bis 5, ferner umfassend:
Empfangen von Daten von dem Sender (100; 200) unter Verwendung des dritten Frequenzoffsets.

**7.** Betriebsverfahren nach einem der Ansprüche 1 bis 6, wobei eine Bandbreite des Frequenzbands 320 MHz beträgt, und

eine Bandbreite jedes der Vielzahl von Unterbändern 20 MHz beträgt.

**8.** Betriebsverfahren eines Empfängers (100; 200), der mit einem Sender (100; 200) über ein Frequenzband kommuniziert, wobei das Betriebsverfahren umfasst:

Detektieren (S101; S403) eines von dem Sender (100; 200) empfangenen Signals in einer Vielzahl von Unterbändern, die das Frequenzband bilden, wobei das Signal für jedes Unterband auf der Grundlage einer Autokorrelationsfunktion, ACF, und einer Kreuzkorrelationsfunktion, CCF, detektiert wird (S201);
Bestimmen (S103; S405) erster Frequenzoffsets für das Signal in Empfangsunterbändern, unter der Vielzahl von Unterbändern, in denen das Signal detektiert worden ist;
Bestimmen (S105; S407) zweiter Frequenzoffsets durch Kalibrieren von Trägerfrequenzoffsets auf der Grundlage eines Abstands jedes der Empfangsunterbänder von einer Mittenfrequenz des Frequenzbands;
Berechnen (S203) von Phaseninformation auf der Grundlage eines ACF-Ergebnisses jedes Unterbands;
Kalibrieren (S205) von Phaseninformation auf der Grundlage einer Frequenzposition des Unterbands;
Rekonstruieren (S207) eines In-Phase/Quadratur, I/Q,-Vektors auf der Grundlage des Absolutwerts der ACF und der kalibrierten Phaseninformation;
Kombinieren (S209) von I/Q-Vektoren von Unterbändern, in denen das Signal detektiert worden ist; und
Bestimmen (S211) eines dritten Frequenzoffsets durch Berechnen von Phaseninformation eines kombinierten Vektors.

**9.** Betriebsverfahren nach Anspruch 4, wobei die ACF einer Verzögerung entspricht, die gleich einer Abtastwertwiederholperiode der Trainingssequenz ist.

**10.** Betriebsverfahren nach Anspruch 9, ferner umfassend:

Erhalten eines kalibrierten Trägerfrequenzoffsetwerts durch inverse Kalibrierung (S507) eines Abtasttaktoffsets; und
Rekonstruieren (S509) eines In-Phase/Quadratur, I/Q,-Werts für jedes Unterband unter Verwendung des kalibrierten Trägerfrequenzoffsetwerts.

**11.** Betriebsverfahren nach einem der Ansprüche 1 bis 10, ferner umfassend:
Aufteilen (S501) eines Breitbandkanals in Unterbänder.

**12.** Empfänger zum Kommunizieren mit einem Sender (100; 200) über ein Frequenzband, wobei der Empfänger (100; 200) umfasst:

eine hochfrequenz-integrierte Schaltung, RFIC, (120); und
einen Prozessor (110), der zum Durchführen des Verfahrens nach einem der Ansprüche 1 bis 11 konfiguriert ist, und
wobei das von dem Sender (100; 200) empfangene Signal über die RFIC (120) empfangen wird.

**Revendications**

**1.** Procédé de fonctionnement d'un récepteur (100 ; 200) qui communique avec un émetteur (100 ; 200) via une bande de fréquences, le procédé de fonctionnement comprenant :

détecter (S101 ; S403) un signal reçu de l'émetteur (100 ; 200) dans une pluralité de sous-bandes constituant la bande de fréquences ;
déterminer (S103 ; S405) de premiers décalages de fréquence pour le signal des sous-bandes de réception, parmi la pluralité de sous-bandes, dans lesquelles le signal a été détecté ;
déterminer (S105 ; S407) de deuxièmes décalages de fréquence en calibrant des décalages de fréquence de porteuse sur la base d'une distance de chacune des sous-bandes de réception par rapport à une fréquence centrale de la bande de fréquences ; et
déterminer (S107 ; S409) un troisième décalage de fréquence pour la bande de fréquences sur la base des deuxièmes décalages de fréquence,

dans lequel la détermination (S107 ; S409) du troisième décalage de fréquence comprend la détermination du troisième décalage de fréquence en effectuant un moyennage pondéré des deuxièmes décalages de fréquence sur la base de pondérations correspondant à une amplitude du signal mesurée dans chacune des sous-bandes de réception.

**2.** Procédé de fonctionnement d'un récepteur (100 ; 200) qui communique avec un émetteur (100 ; 200) via une bande de fréquences, le procédé de fonctionnement comprenant :

détecter (S101 ; S403) un signal reçu de l'émetteur (100 ; 200) dans une pluralité de sous-bandes constituant la bande de fréquences ;
déterminer (S103 ; S405) de premiers décalages de fréquence pour le signal dans des sous-bandes de réception, parmi la pluralité de sous-bandes, dans lesquelles le signal a été détecté ;
déterminer (S105 ; S407) de deuxièmes décalages de fréquence en calibrant des décalages de fréquence de porteuse sur la base d'une distance de chacune des sous-bandes de réception par rapport à une fréquence centrale de la bande de fréquences ; et
déterminer (S107 ; S409) un troisième décalage de fréquence pour la bande de fréquences sur la base des deuxièmes décalages de fréquence,
dans lequel la détermination (S107 ; S409) du troisième décalage de fréquence comprend :

reconstruire (S315) des vecteurs en phase/quadrature, I/Q, pour chacune des sous-bandes de réception en utilisant une amplitude du signal mesurée dans chacune des sous-bandes de réception et les deuxièmes décalages de fréquence ;
obtenir un vecteur pour la bande de fréquences par combinaison des vecteurs I/Q ; et
déterminer le troisième décalage de fréquence en calculant une phase du vecteur pour la bande de fréquences.

**3.** Procédé de fonctionnement selon la revendication 1 ou 2, dans lequel le signal comprend une séquence d'apprentissage qui est répétée périodiquement dans le domaine temporel, et
la détermination (S103 ; S405) des premiers décalages de fréquence comprend la détermination du premier décalage de fréquence sur la base de la périodicité de la séquence d'apprentissage.

**4.** Procédé de fonctionnement selon la revendication 3, dans lequel la détermination (S103 ; S405) des premiers décalages de fréquence comprend la détermination du premier décalage de fréquence en extrayant (S203 ; S309 ; 505) des informations de phase pour chacune de la pluralité de sous-bandes à partir de la séquence d'apprentissage en utilisant une fonction d'autocorrélation, ACF.

**5.** Procédé de fonctionnement selon l'une quelconque des revendications 1 à 4, dans lequel la distance de chacune des sous-bandes de réception par rapport à la fréquence centrale de la bande de fréquences correspond à la valeur absolue d'un indice de chacune des sous-bandes de réception.

**6.** Procédé de fonctionnement selon l'une quelconque des revendications 1 à 5, comprenant en outre :
recevoir des données de l'émetteur (100 ; 200) en utilisant le troisième décalage de fréquence.

**7.** Procédé de fonctionnement selon l'une quelconque des revendications 1 à 6, dans lequel une largeur de bande de la bande de fréquences est de 320 MHz, et
une largeur de bande de chacune de la pluralité de sous-bandes est de 20 MHz.

**8.** Procédé de fonctionnement d'un récepteur (100 ; 200) qui communique avec un émetteur (100 ; 200) via une bande de fréquences, le procédé de fonctionnement comprenant :

détecter (S101 ; S403) un signal reçu de l'émetteur (100 ; 200) dans une pluralité de sous-bandes constituant la bande de fréquences, dans lequel le signal pour chaque sous-bande est détecté (S201) sur la base d'une fonction d'autocorrélation (ACF) et d'une fonction de corrélation croisée, CCF ;
déterminer (S103 ; S405) de premiers décalages de fréquence pour le signal dans des sous-bandes de réception, parmi la pluralité de sous-bandes, dans lesquelles le signal a été détecté ;
déterminer (S105 ; S407) de deuxièmes décalages de fréquence en calibrant des décalages de fréquence de porteuse sur la base d'une distance de chacune des sous-bandes de réception par rapport à une fréquence centrale de la bande de fréquences ;

calculer (S203) des informations de phase sur la base d'un résultat d'ACF de chaque sous-bande ;

calibrer (S205) des informations de phase sur la base d'une position fréquentielle de la sous-bande ;

reconstruire (S207) un vecteur en phase/quadrature, I/Q, sur la base de la valeur absolue de l'ACF et des informations de phase calibrées ;

combiner (S209) des vecteurs I/Q de sous-bandes dans lesquelles le signal a été détecté ; et

déterminer (S211) un troisième décalage de fréquence en calculant des informations de phase d'un vecteur combiné.

9. Procédé de fonctionnement selon la revendication 4, dans lequel l'ACF correspond à un retard égal à une période de répétition d'échantillons de la séquence d'apprentissage.

10. Procédé de fonctionnement selon la revendication 9, comprenant en outre :

obtenir une valeur calibrée de décalage de fréquence de porteuse par calibrage inverse (S507) d'un décalage d'horloge d'échantillonnage (SCO) ; et

reconstruire (S509) une valeur en phase/quadrature (I/Q) pour chaque sous-bande en utilisant la valeur calibrée de décalage de fréquence de porteuse.

11. Procédé de fonctionnement selon l'une quelconque des revendications 1 à 10, comprenant en outre :

diviser (S501) un canal à large bande en sous-bandes.

12. Récepteur destiné à communiquer avec un émetteur (100 ; 200) via une bande de fréquences, le récepteur (100 ; 200) comprenant :

un circuit intégré radiofréquence, RFIC, (120) ; et

un processeur (110) configuré pour exécuter le procédé selon l'une quelconque des revendications 1 à 11, et dans lequel le signal reçu de l'émetteur (100 ; 200) est reçu par l'intermédiaire du RFIC (120).

# FIG. 1

# FIG. 2

100

130

110

120

Processor ↔ RFIC

# FIG. 3A

200

210            220            230            240

| Band Split Circuit | → | Carrier Frequency Offset Estimator | → | Calibration Circuit | → | Sub-band Combiner |

# FIG. 3B

EP 4 489 359 B1

# FIG. 3C

# FIG. 3D

CFO deviation due to SCO effect

F0$_{(ppm)}$ =20ppm

# FIG. 4

START

DETECT SIGNAL RECEIVED FROM
TRANSMITTER AT PLURALITY OF SUB-BANDS
CONSTITUTING FREQUENCY BAND — S101

DETERMINE FIRST FREQUENCY OFFSETS FOR
SIGNAL AT RECEPTION SUB-BANDS AT WHICH
SIGNAL HAS BEEN DETECTED AMONG SUB-BANDS — S103

DETERMINE SECOND FREQUENCY OFFSETS BY
CALIBRATING FIRST FREQUENCY OFFSETS BASED ON
DISTANCE OF EACH OF RECEPTION SUB-BANDS
FROM CENTER FREQUENCY OF FREQUENCY BAND — S105

DETERMINE THIRD FREQUENCY OFFSET
FOR FREQUENCY BAND BASED ON SECOND
FREQUENCY OFFSETS — S107

END

# FIG. 5A

START

DETECT RECEPTION SIGNAL FOR EACH
SUB-BAND BASED ON ACF AND CCF — S201

CALCULATE PHASE INFORMATION (CFO)
BASED ON ACF RESULT OF EACH SUB-BAND — S203

CALIBRATE PHASE INFORMATION (CFO) BASED
ON FREQUENCY POSITION OF SUB-BAND — S205

RE-CONSTRUCT I/Q VECTOR BASED ON
ABSOLUTE VALUE OF AFC AND CALIBRATED CFO — S207

COMBINE I/Q VECTORS OF SUB-BANDS AT
WHICH RECEPTION SIGNAL HAS BEEN DETECTED — S209

DETERMINE FREQUENCY OFFSET BY CALCULATING
PHASE INFORMATION OF ONE COMBINED VECTOR — S211

END

EP 4 489 359 B1

## FIG. 5B

# FIG. 5C

EP 4 489 359 B1

# FIG. 6

# FIG. 7

START

SPLIT FREQUENCY BAND OF RECEPTION
SIGNAL INTO FIRST SUB-BANDS — S401

DETECT RECEPTION SIGNAL AT SECOND
SUB-BANDS AMONG FIRST SUB-BANDS — S403

DETERMINE FIRST FREQUENCY OFFSETS FOR
RECEPTION SIGNAL AT SECOND SUB-BANDS — S405

DETERMINE SECOND FREQUENCY OFFSET BY
CALIBRATING FIRST FREQUENCY OFFSET BASED ON
DISTANCE OF EACH OF SECOND SUB-BANDS
FROM CENTER FREQUENCY OF FREQUENCY BAND — S407

DETERMINE THIRD FREQUENCY OFFSET FOR
FREQUENCY BAND BY USING SECOND FREQUENCY
OFFSET FOR EACH OF SECOND SUB-BANDS — S409

END

# FIG. 8

Input signal

$\downarrow$ r(n)

Split wideband into sub-bands —— S501

$\downarrow$ rm(n)

Auto-correlation function —— S503

$\downarrow$ Rm(n)

Phase (CFO) extraction —— S505

$\downarrow \hat{f}_{CFO, m}$

Calibration for SCO effect —— S507

$\downarrow \hat{f}_{calib, m}$

I/Q re-construction —— S509

$\downarrow R_{m,new}$

Sub-band combining —— S511

$\downarrow \sum R_{m,new}$

Phase extraction —— S513

$\downarrow \hat{f}_{CFO,calib}$ & $\widehat{FO}$ (ppm)

# FIG. 9A

Freq. offset estimation, 20 in 320, AWGN, 45dB, +/− 20ppm

Legend:
- CH_OFFSET = −8
- CH_OFFSET = −7
- CH_OFFSET = −6
- CH_OFFSET = −5
- CH_OFFSET = −4
- CH_OFFSET = −3
- CH_OFFSET = −2
- CH_OFFSET = −1

Y-axis: Empirical CDF

X-axis: Initial FreqOffset (ppm) from Sync.

# FIG. 9B

Freq. offset estimation, 20 in 320, AWGN, 45dB, +/− 20ppm

Legend:
- CH_OFFSET = +8
- CH_OFFSET = +7
- CH_OFFSET = +6
- CH_OFFSET = +5
- CH_OFFSET = +4
- CH_OFFSET = +3
- CH_OFFSET = +2
- CH_OFFSET = +1

Y-axis: Empirical CDF

X-axis: Initial FreqOffset (ppm) from Sync.

# FIG. 9C

# FIG. 9D

Freq. offset estimation, 20 in 320, AWGN, 45dB, +/− 20ppm

Legend:
- CH_OFFSET = +8
- CH_OFFSET = +7
- CH_OFFSET = +6
- CH_OFFSET = +5
- CH_OFFSET = +4
- CH_OFFSET = +3
- CH_OFFSET = +2
- CH_OFFSET = +1

Y-axis: Empirical CDF

X-axis: Initial FreqOffset (ppm) from Sync.

# FIG. 9E

Freq. offset estimation, 20 in 320, ChD, 45dB, +/− 20ppm

# FIG. 9F

Freq. offset estimation, 20 in 320, ChD, 45dB, +/− 20ppm

Empirical CDF

CH_OFFSET = +8
CH_OFFSET = +7
CH_OFFSET = +6
CH_OFFSET = +5
CH_OFFSET = +4
CH_OFFSET = +3
CH_OFFSET = +2
CH_OFFSET = +1

Initial FreqOffset (ppm) from Sync.

# FIG. 9G

# FIG. 9H

Freq. offset estimation, 20 in 320, ChD, 45dB, +/- 20ppm

Legend:
- CH_OFFSET = +8
- CH_OFFSET = +7
- CH_OFFSET = +6
- CH_OFFSET = +5
- CH_OFFSET = +4
- CH_OFFSET = +3
- CH_OFFSET = +2
- CH_OFFSET = +1

Y-axis: Empirical CDF

X-axis: Initial FreqOffset (ppm) from Sync.

# FIG. 10

Freq. offset estimation, 320 in 320, ChD, 45dB, +/− 20ppm

# FIG. 11

Home Gadget 241

242

245

Access Point

Home Appliances

243

Entertainment